# EUROPEAN PATENT APPLICATION

(11) **EP 4 738 835 A1**
(43) Date of publication of application: **06.05.2026**
(21) Application number: 24831066.6
(22) Date of filing: 29.06.2024
(51) Int. Cl.: H04N 21/2187, H04N 21/431, H04N 21/4788

(54) **LIVESTREAMING INTERACTION METHOD AND APPARATUS, DEVICE AND STORAGE MEDIUM**

(30) Priority: 30.06.2023 CN 202310806530
(71) Applicant: Beijing Zitiao Network Technology Co., Ltd., Beijing 100190 (CN)
(72) Inventor: LI, Yijie, Beijing 100028 (CN); FANG, Angxiang, Beijing 100028 (CN)
(74) Representative: Isarpatent
(86) International application number: PCT/CN2024/102758
(87) International publication number: WO 2025/002442

(57) **Abstract**

Embodiments of the disclosure provide a method, an apparatus, a device, and a storage medium for live streaming interaction. The method includes: presenting first interaction prompt information on a live streaming room interface corresponding to a first user, in accordance with an interaction between the first user and a second user in a live streaming room satisfying a predetermined condition, the first interaction prompt information prompting at least one interaction mode with the second user for selection by the first user; and performing an interaction with the second user in a target interaction mode of the at least one interaction mode, in response to detecting a trigger on the target interaction mode. In this way, interaction prompt information prompting more interaction modes for selection by the user may be provided to the user, based on an interaction status of the user in the live streaming room, which helps to improve the interaction experience of the user in the live streaming room.

## Description

**The** present application claims priority to Chinese Patent Application No. 202310806530.4, filed on June 30, 2023, and entitled "METHOD, APPARATUS, DEVICE, AND STORAGE MEDIUM FOR LIVE STREAMING INTERACTION", the entirety of which is incorporated herein by reference.

### FIELD

Example embodiments of the present disclosure generally relate to the field of computers, and in particular, to a method, an apparatus, a device, and a computer-readable storage medium for live streaming interaction.

### BACKGROUND

With the development of computer technologies, various live streams can provide people with content such as information, education, and entertainment. When watching a live stream, a user may perform various interactions with other users in a live streaming room, including but not limited to commenting. The user here may be a live streamer or an audience watching the live stream. For example, in a live streaming room, an audience may comment or reply to a comment posted by another audience.

### SUMMARY

In a first aspect of the present disclosure, a method for live streaming interaction is provided. The method comprises: presenting first interaction prompt information on a live streaming room interface corresponding to a first user, in accordance with an interaction between the first user and a second user in a live streaming room satisfying a predetermined condition, the first interaction prompt information prompting at least one interaction mode with the second user for selection by the first user; and performing an interaction with the second user in a target interaction mode of the at least one interaction mode, in response to detecting a trigger on the target interaction mode.

In a second aspect of the present disclosure, an apparatus for live streaming interaction is provided. The apparatus comprises: a prompting module configured to present first interaction prompt information on a live streaming room interface corresponding to a first user, in accordance with an interaction between the first user and a second user in the live streaming room satisfying a predetermined condition, the first interaction prompt information prompting at least one interaction mode with the second user for selection by the first user; and an interaction module configured to perform an interaction with the second user in a target interaction mode of the at least one interaction mode, in response to detecting a trigger on the target interaction mode.

In a third aspect of the present disclosure, an electronic device is provided. The device comprises at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The medium stores a computer program, and the computer program, when executed by a processor, implements the method of the first aspect.

It should be understood that the content described in the summary of the present disclosure is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in combination with the accompanying drawings. In the drawings, the same or similar reference numbers refer to the same or similar elements, wherein:
FIG. 1 illustrates a schematic diagram of an example environment in which embodiments of the present disclosure can be implemented;
FIG. 2A to FIG. 2D illustrate schematic diagrams of examples of a live streaming room interface according to some embodiments of the present disclosure;
FIG. 3A to FIG. 3D illustrate schematic diagrams of examples of inputting comments in a live streaming room according to some embodiments of the present disclosure;
FIG. 4A to FIG. 4B illustrate schematic diagrams of examples of presenting reply comments in a live streaming room according to some embodiments of the present disclosure;
FIG. 5A to FIG. 5B illustrate schematic diagrams of examples of presenting comments in a live streaming room according to some embodiments of the present disclosure;
FIG. 6 illustrates a flowchart of a process for live streaming interaction according to some embodiments of the present disclosure;
FIG. 7 illustrates a schematic structural block diagram of an apparatus for live streaming interaction according to some embodiments of the present disclosure; and
FIG. 8 illustrates an electronic device in which one or more embodiments of the present disclosure may be implemented.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for example purposes only and are not intended to limit the scope of the present disclosure.

In the description of the embodiments of the present disclosure, the terms "including/comprising" and the like should be understood as open inclusion, that is "including/comprising but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

Herein, unless explicitly stated, performing one step "in response to A" does not imply that this step is performed immediately after "A", but may include one or more intermediate steps.

It may be understood that the data involved in the technical solution (including but not limited to the data itself, the obtaining or use of the data) should follow the requirements of the corresponding laws and regulations, and related provisions.

It can be understood that, before the technical solutions disclosed in the embodiments of the present disclosure are used, the types of personal information, the usage scope, the usage scenario related to the present disclosure, and the like should be notified to the user in an appropriate manner according to the relevant laws and regulations, and the authorization of the user shall be obtained.

For example, prompt information is sent to the user in response to receiving an active request from a user, to explicitly prompt the user that the requested operation will need to obtain and use personal information of the user, so that the user can autonomously select whether to provide personal information to software or hardware executing the operation of the technical solution of the present disclosure according to the prompt information.

As an alternative but non-limiting implementation, a manner of sending prompt information to the user in response to receiving an active request of the user may be, for example, in a pop-up window, and the prompt information may be presented in a text manner in the pop-up window. In addition, the pop-up window may further carry a selection control for the user to select "agree" or "disagree" to provide personal information to the electronic device.

It may be understood that the foregoing notification and the process of obtaining a user authorization are merely illustrative, and do not constitute a limitation on implementations of the present disclosure, and other manners of meeting related laws and regulations may also be applied to implementations of the present disclosure.

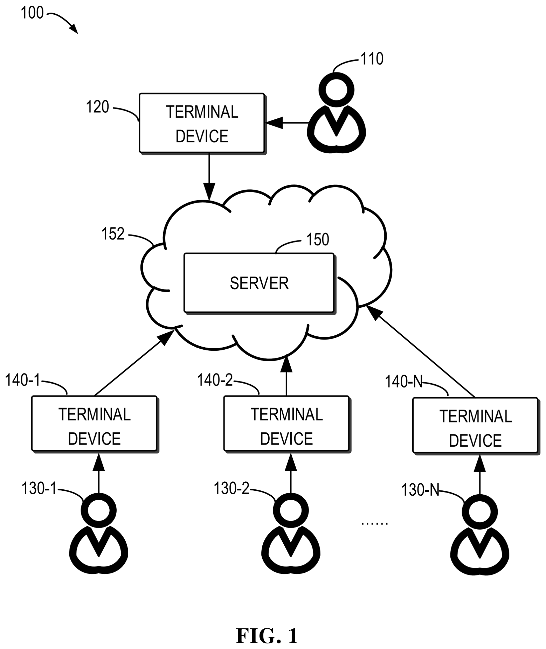

FIG. 1 illustrates a schematic diagram of an example environment 100 in which embodiments of the present disclosure can be implemented. In the environment 100, a user 110 may establish a live streaming room and provide live streaming content and the like through an associated terminal device 120. In some scenarios, the user 110 is also referred to as a live streamer, a live streaming party, or a managing party of a live streaming room, for example.

One or more users 130-1, 130-2, ..., 130-N may watch live streams and participate in interactions in the live streaming room through their respective associated terminal devices 140-1, 140-2, ..., 140-N. For ease of discussion, users 130-1, 130-2, ..., 130-N may be collectively referred to as or individually called the user 130, and terminal devices 140-1, 140-2, ..., 140-N may be collectively referred to as or individually referred to as the terminal device 140. In some scenarios, the user 130 may also be referred to as an audience, a listener, a viewer, or a participant of a live streaming room.

It should be understood that although only a single live streamer user is shown in FIG. 1, in some embodiments, a plurality of live streamer users may initiate live streams in a live streaming room.

In some embodiments, the terminal device 120 and the terminal device 140 may be respectively installed with an application capable of providing a live streaming service, or may access a website capable of providing the live streaming service. The user 110 and the user 130 may operate the terminal device 120 and the terminal device 140 to access the corresponding application or website.

Correspondingly, the terminal device 120 and the terminal device 140 may present a corresponding live streaming interface, for example, may provide live streaming content of a live streaming room, for example, audio live streaming content or video live streaming content.

In some embodiments, the terminal device 120 and the terminal device 140 may further communicate with a server 150 through a network 152 to supply the live streaming service. The server 150 may provide functions such as management, configuration, and maintenance of the application or the website.

The terminal device 120 and the terminal device 140 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a television receiver, a radio broadcast receiver, an electronic book device, a gaming device, or any combination of the foregoing, including accessories and peripherals of these devices, or any combination thereof. In some embodiments, terminal devices 120, 140 can also support any type of interface for a user (such as a "wearable" circuit, or the like). The server 150 may be various types of computing systems/servers capable of providing computing power, including, but not limited to, mainframes, edge computing nodes, computing devices in a cloud environment, and the like.

It should be understood that the structures and functions of the various elements in the environment 100 are described for example purposes only and do not imply any limitation to the scope of the present disclosure.

Generally, users (including live streamers and the audience) of a live streaming room may interact in the live streaming room, and interactions herein may include various types of interactions such as commenting interaction (reply to a comment, like a comment, or the like), gift-giving interaction, game interaction, and the like. In general, users may interact with other users in a public interaction channel (sometimes also referred to as a "public screen" or a "public chat channel") of a live streaming room. In a live streaming room, an "interaction channel" may refer to an interaction path or interaction group for a user. The public interaction channel refers to an interaction path accessible to all users entering the live streaming room. Some live streaming rooms also support group interaction channels to support users joining a particular group for interaction. Some live streaming rooms also support private interaction channels to support two users to interact with each other.

In the conventional interaction solution, when a user interacts with another user, the live broadcast room does not present, to the user, prompt information indicating that the interaction mode can be switched. This may cause the user to be unaware that the user can switch to another interaction mode and interact with another user in another interaction mode, which may affect the interaction experience of the user in the live streaming room.

According to an embodiment of the present disclosure, a solution for live streaming interaction is provided. In this solution, first interaction prompt information is presented on a live streaming room interface corresponding to a first user, in accordance with an interaction between the first user and a second user in a live streaming room satisfying a predetermined condition, and the first interaction prompt information prompts at least one interaction mode with the second user for selection by the first user. An interaction with the second user is performed in a target interaction mode, selected by the the first user, of the at least one interaction mode, in response to detecting a trigger on the target interaction mode. In this way, according to the embodiments of the present disclosure, interaction prompt information prompting more interaction modes for selection by the user may be provided to the user, based on an interaction status of the user in the live streaming room, which helps to improve the interaction experience of the user in the live streaming room, and promotes the enthusiasm for interaction of the user.

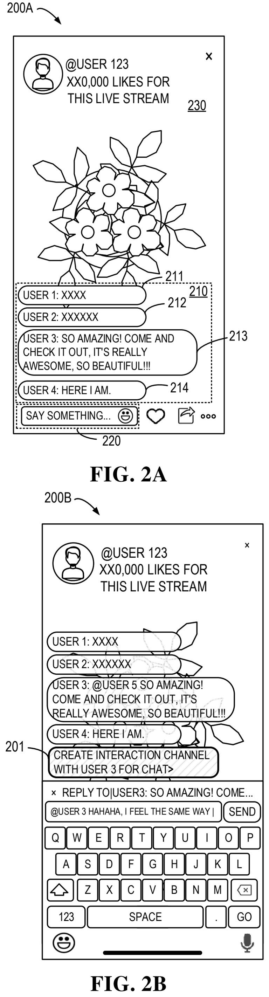

Example interactions in a live streaming room according to some embodiments of the present disclosure will be described below with reference to FIGS. 2A-5B. Such a live streaming interface may correspond to, for example, a live streamer of a live streaming room and/or an audience of a live streaming room. FIG. 2A to FIG. 5B respectively shows schematic diagrams of examples of a live streaming room interface according to some embodiments of the present disclosure.

It should be understood that the live streaming room interface shown in FIG. 2A to FIG. 5B and the live streaming room interface in the other drawings described below are merely example interfaces, and various interface designs may actually exist. Respective graphical elements in the interface may have different arrangements and different visual representations, one or more of which may be omitted or replaced, and one or more other elements may also be present. Embodiments of the present disclosure are not limited in this respect.

In the embodiments of the present disclosure, first interaction prompt information is presented on a live streaming room interface corresponding to a first user, in accordance with an interaction between the first user and a second user in a live streaming room satisfying a predetermined condition. Both the first user and the second user herein may be any user participating in the interaction in the live streaming room.

In some embodiments, an interaction popularity between the first user and the second user may be determined based on an interaction status of the first user and the second user in the live streaming room, and it is determined that the interaction between the first user and the second user in the live streaming room satisfies the predetermined condition, in accordance with the interaction popularity reaches a predetermined threshold. The interaction popularity refers to an indicator used to measure the degree of interaction between users.

Regarding the manner of determining the interaction popularity, in some embodiments, a terminal device (for example, the terminal device 120 and/or the terminal device 140, and the same applies to the terminal device described below) may determine the interaction popularity between the first user and the second user in the live streaming room based on the number of interactions between the first user and the second user and/or the interaction frequency within a certain period of time. For example, the terminal device may determine the interaction popularity between the first user and the second user in the live streaming room based on a number of comments replied between the first user and the second user, or a frequency of comments replied by the first user and the second user in a certain time period. It can be understood that the more the number of comments replied between the first user and the second user, the higher the interaction popularity, and the higher the frequency of commenting interaction between the first user and the second user within a certain period of time, the higher the interaction popularity. It may be understood that, in addition to the commenting interaction, the terminal device may determine the interaction popularity based on the number of forms of interactions, such as a gift-giving interaction or a game interaction, or based on the frequency of the interactions within a certain time period.

In some embodiments, the terminal device may determine the interaction popularity between the first user and the second user in response to the number of times of interactions of the comments sent between the first user and the second user and/or the frequency of the interactions within a certain time period. For example, the terminal device may determine the interaction popularity between the first user and the second in response to interactions such as likes, replies, reposts, and the like on comments made by each other.

In some embodiments, in addition to determining the interaction popularity to decide whether the interaction satisfies the predetermined condition, the predetermined condition for interaction may be set to a predetermined threshold related to one or more types of interactions. For example, the terminal device 110 may, for example, determine that the interaction between the first user and the second user in the live streaming room satisfies the predetermined condition, in response to the number of commenting interactions between the first user and the second user reaching a predetermined number, and/or in response to the frequency of the commenting interaction between the first user and the second user within a certain time period reaching a predetermined number.

The terminal device associated with the first user presents the first interaction prompt information on a live streaming room interface corresponding to the first user, in accordance with an interaction between the first user and the second user in the live streaming room satisfying a predetermined condition, and the first interaction prompt information prompts at least one interaction mode with the second user for selection by the first user. In some embodiments, the terminal device associated with the second user may present second interaction prompt information on the live streaming room interface corresponding to the second user, in accordance with the interaction between the first user and the second user in the live streaming room satisfying the predetermined condition, and the second interaction prompt information prompts at least one interaction mode with the first user for selection by the first user. In other words, the interaction prompt information may be presented for both parties whose interaction satisfies the predetermined condition. The second interaction prompt information and the first interaction prompt information may be respectively presented in the live streaming room interface corresponding to the first user and the live streaming room interface corresponding to the second user, or may not be presented at the same time. The second interaction prompt information and the first interaction prompt information may be the same information or different information, which is not limited in the present disclosure.

As shown in FIG. 2A, a live streaming room interface 200A includes a region 210 for presenting comments and a region 230 for presenting a live streaming content. In some embodiments, while watching the live streaming content, the region 210 may be presented in some suitable manner to display comments posted by users watching the live streaming content. FIG. 2A shows a schematic diagram of the region 210 being triggered to display. In some embodiments, the region 210 may be presented by clicking a button or icon, such as "interaction" or "comment" located at a predetermined location (for example, the bottom) of the live streaming room interface 200A. In some embodiments, the region 210 may also be presented by clicking the text or an icon input box 220 at the bottom of the live streaming room interface 200A.

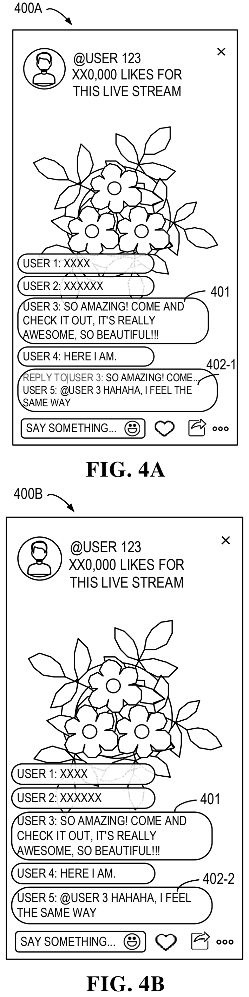

In some embodiments, the size of the region 210 may be fixed, and in the case that the total size of the comments in the live streaming room exceeds the size of the region 210, the comments will be scrolled and displayed based on the posted time of the comments. For example, as shown in FIG. 2A, 4 comments (including comments 211, 212, 213, and 214) are presented in the region 210 of the live streaming room interface 200A, and if there is a new comment posted by a user in the live streaming room at this time, then the first comment (that is, the comment 211) of the 4 comments will be scrolled and hidden, to display the newly posted comment. In some embodiments, the terminal device may present more comments in response to receiving a sliding operation at the region 210. For example, after the comment 211 is scrolled and hidden, the terminal device may present a historical comment in response to receiving a downward sliding operation in the region 210, and at this time, the newly posted comment is scrolled and hidden, and 4 comments as shown in FIG. 2A may still be presented in the region 210.

The interaction status between the current user and another user in the live streaming room may be tracked, for example, by collecting the number of commenting interactions corresponding to the comments posted in the region 210 by the current user and another user. Taking the current user as the first user as an example (that is, the live streaming room interface 200A is the live streaming room interface of the first user), the terminal device may present the first interaction prompt information, in accordance with the interaction between the first user and another user (that is, the second user) in the live streaming room satisfying the predetermined condition.

In some embodiments, in the case that the interaction between the first user and the second user in the live streaming room satisfies the predetermined condition, the terminal device may present the first interaction prompt information in response to detecting that an interaction with the second user is triggered by the first user in the live streaming room. For example, in the case that the interaction between the first user and the second user in the live streaming room satisfies the predetermined condition, the terminal device may present the first interaction prompt information in response to detecting that the first user selects a comment from the second user in the live streaming room interface to reply to.

Specifically, the interaction popularity may be accumulated with the number of interactions between the first user and the second user, and in the case that the interaction popularity reaches a threshold, and it is detected that the first user replies to a comment of the second user in the live streaming room interface, the terminal device may determine that there is a strong interaction need between the first user and the second user, and then present the first interaction prompt information on the live streaming room interface. The threshold herein may be a default value predetermined in the live streaming room, or may be a value set by the first user. If the interaction popularity reaches the threshold but the terminal device does not detect the comment of the second user being replied to by the first user in the live streaming room interface, the terminal device cannot determine whether the two parties will continue to interact subsequently and will not present the first interaction prompt information. It should be noted that, even if it is detected that a comment of another user other than the second user is replied to by the first user in the live streaming room interface, because the comment is not for the second user, the terminal device may not present the first interaction prompt information.

It may be understood that, for the second user, in the case that the interaction between the first user and the second user in the live streaming room satisfies the predetermined condition, the terminal device corresponding to the second user may further present the second interaction prompt information in response to detecting that an interaction with the first user (for example, replying to a comment of the first user) is triggered by the second user in the live streaming room. In some embodiments, the determining of the interaction status or the interaction popularity between users and deciding whether the interaction satisfies the predetermined condition may be performed by the server and indicated to the terminal device, or the terminal device may directly receive, from the server, the interaction prompt information provided after the interaction satisfies the predetermined condition. Certainly, depending on the specific implementation, the terminal device may determine the interaction status and decide the predetermined condition locally.

In some embodiments, the at least one interaction mode indicated by the first interaction prompt information and the second interaction prompt information may comprise a first interaction mode for creating a private interaction channel for the first user and the second user, and/or a second interaction mode for following a user account. The private interaction channel for the first user and the second user may also be referred to as a friend interaction channel, a personal interaction channel, a private chat channel, and the like, and such a private interaction channel may be understood as an interaction channel only for the first user and the second user. Taking the live streaming room corresponding to the first user as an example, the first interaction prompt information may indicate the first interaction mode for creating the private interaction channel for the first user and the second user. If the first user has not previously followed the second user, the first interaction prompt information may alternatively or additionally indicate the second interaction mode for following the second user. Correspondingly, if the live streaming room interface corresponds to the second user, the second interaction prompt information presented in the live streaming room interface corresponding to the second user is used to indicate the at least one interaction mode with the first user for selection by the second user, and the at least one interaction mode comprises creating the private interaction channel for the first user and the second user, or following the first user. Here, only an example of an interaction mode supportable between the first user and the second user is given, and any other suitable interaction mode may be provided.

In some embodiments, whether the interaction prompt information is to be presented may be determined based on whether the interaction between the first user and the second user in the third interaction mode satisfies the predetermined condition. The third interaction mode herein is different from the first interaction mode and the second interaction mode of the at least one interaction mode. The third interaction mode may include, for example, an interaction mode in a public interaction channel of the live streaming room, or an interaction mode in a group interaction channel of the live streaming room. The public interaction channel herein may be understood as a public channel in which all users in the live streaming room may interact, and the group interaction channel herein may be understood as a channel in which some users in the live streaming room may interact. The interaction region corresponding to the public interaction channel is presented in the region 210 shown in FIG. 2A. For example, whether the interaction between the first user and the second user in the live streaming room satisfies the predetermined condition may be determined based on the interaction popularity corresponding to the interaction (for example, an interaction in the public interaction channel) between the first user and the second user in the live streaming room in the third interaction mode. The terminal device further presents the first interaction prompt information prompting the first interaction mode or the second interaction mode when it is determined that the predetermined condition is satisfied.

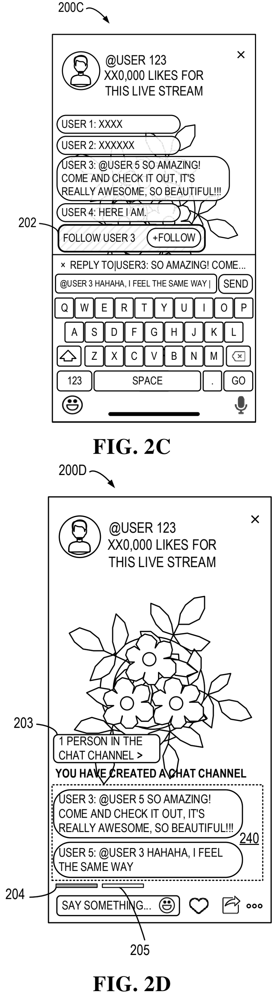

As shown in FIG. 2B and FIG. 2C, taking the first user as user 5 as an example, a live streaming room interface 200B corresponds to the user 5. If the interaction between the user 5 and user 3 satisfies the predetermined condition (for example, the interaction popularity reaches a popularity threshold), and a comment for the user 3 is detected in the live streaming room interface 200B, the live streaming room interface 200B shown in FIG. 2B or a live streaming room interface 200C shown in FIG. 2C is presented. In FIG. 2B, the terminal device presents interaction prompt information 201 in the live streaming room interface 200B, and the interaction prompt information 201 may prompt the first interaction mode for creating a private interaction channel between the user 5 and the user 3. In FIG. 2C, the terminal device presents the interaction prompt information 202 in the live streaming room interface 200C, and the interaction prompt information 202 may prompt the second interaction mode for following the user 3, for example, by a user following control for the user 3. In some embodiments, the interaction prompt information for prompting interaction channel creation and user account following may also be presented in the live streaming room interface at the same time.

After the first interaction prompt information or the second interaction prompt information is presented, the terminal device may perform an interaction with another user participating in the interaction in the target interaction mode, in response to detecting a trigger on the target interaction mode of the at least one interaction mode. Taking the current user as the first user and the live streaming room of the current user being the live streaming room corresponding to the first user as an example, the terminal device may perform the interaction with the second user in the target interaction mode, in response to detecting the trigger on the target interaction mode of the at least one interaction mode. It may be understood that, if the current user is the second user and the live streaming room of the current user is the live streaming room corresponding to the second user, the terminal device may perform, in response to detecting the trigger on the target interaction mode of the at least one interaction mode, the interaction with the first user in the target interaction mode.

In the example of FIG. 2B, the interaction indicated by the interaction prompt information 201 to create the private interaction channel with the user 3 may be performed, in response to receiving the trigger on the interaction prompt information 201. The terminal device may further present a live streaming room interface 200D shown in FIG. 2D. As shown in FIG. 2D, prompt information 203 is presented in the live streaming room interface 200D, and the prompt information 203 may prompt the user that the interaction channel is currently created, with whom the interaction channel was created, and the number of people in the interaction channel. The user 5 and the user 3 may perform a private conversation in the interaction channel, and other users in the live streaming room cannot know the interaction content of the user 5 and the user 3 in the interaction channel. A historical session between the user 5 and the user 3 is presented in a region 240.

In some embodiments, the region 240 may be referred to as an interaction region. In some embodiments, historical interaction information of the user 5 and the user 3 in the live streaming room may also be presented in the region 240. The historical interaction information at least includes historical interaction information between the user 5 and the user 3 in another interaction mode, for example, may include interaction comments between the two users in a public interaction channel or a group interaction channel of the live streaming room, and the interaction comment includes, but is not limited to, a reply on a comment, a like on a comment, and the like. Alternatively, or in addition, the historical interaction information may further include a historical gift-giving interaction status, a historical game interaction status, and the like.

In some embodiments, if the presentation of the interaction prompt information is determined based on whether the interaction between two users in the public interaction channel of the live streaming room satisfies the predetermined condition, the historical interaction information, such as the interaction comment, of the two users in the public interaction channel of the live streaming room may be presented in the interaction region of the created private interaction channel. In some embodiments, if the presentation of the interaction prompt information is determined based on whether the interaction between two users in the group interaction channel of the live streaming room satisfies the predetermined condition, historical interaction information, such as the interaction comment, of the two users in the group interaction channel of the live streaming room may be presented in the interaction region of the created private interaction channel. In other embodiments, regardless of which interaction mode is used to determine the presentation of the interaction prompt information, the historical interaction information of the two users in one or more other interaction modes may be presented in the interaction region of the created private interaction channel.

In some embodiments, channel switching controls 204 and 205 may be presented in the live streaming room interface 200D. The terminal device may, in response to detecting a trigger on the channel control 205, switch to display the interaction region corresponding to the public interaction channel of the live streaming room, for example, the interaction region 210 in FIG. 2A. The terminal device may switch back to display the private interaction channel between the user 5 and the user 3 (that is, the channel where only the private interaction between the two users is visible), in response to detecting a trigger on the channel control 204.

In some embodiments, the user 5 and the user 3 in the first interaction mode may further invite another user to join the interaction channel, for example, the user 5 may invite user 2 to join the interaction channel. The live streaming room interface corresponding to the user 2 joining the interaction channel may also present the region 240. In such a case, the interaction channel containing the user 2, the user 3, and the user 5 may also be regarded as a group interaction channel.

In some embodiments, in the example of FIG. 2C, a following operation indicated by the interaction prompt information 202 may be performed, in response to receiving a trigger on the interaction prompt information 202 (for example, by a user following control in the interaction prompt information 202). As such, the user 5 may follow the user account of the user 3.

In some cases, in a conventional live streaming room interaction solution, when a user selects a comment for interaction, there is no response prompt for the selected comment content in the live streaming room. This may cause the user to be unable to know whether a certain comment is successfully triggered, or may doubt whether a reply to a comment can be triggered, which significantly affects the interactive experience of the user in the live streaming room.

To address this issue, in some embodiments, at least one comment may be presented in the live streaming room interface in a first appearance style. The first appearance style herein may be a default appearance style, and the comment posted in the live streaming room may be presented in the live streaming room interface in the first appearance style by default.

The first appearance style of the at least one comment presented within the live streaming room may be the same. In this case, different comments posted by different users will be presented in the live streaming room interface in the same first appearance style. In some embodiments, the first appearance style of the at least one comment presented in the live streaming room may be different. In this case, the first appearance style is a default style respectively predetermined by different users. A user posting a comment may set the appearance of the comment posted by the user, for example, font, color, background color, and the like of the comment content. The comment posted by such a user in the live broadcast room will be presented on the live streaming room interface with the set appearance, and at this time, the set appearance may also be considered as the default style of the comments posted by the user. In this case, at least one comment presented in the live broadcast room interface with the first appearance style may have different first appearance styles corresponding to the respective comments.

In some embodiments, the terminal device may present a first comment, in response to detecting a first predetermined operation on the first comment of the at least one comment, and the second appearance is different from the first appearance style. In some embodiments, the second appearance style displays the first comment more prominently compared to the first appearance style. For example, the font size in the second appearance style is larger than the font size in the first appearance style, the background color in the second appearance style is darker than the background color in the first appearance style, the second appearance style includes a border which is not present in the first appearance style, or the like. It may be understood that both the first appearance style and the second appearance style may be any appearance style, as long as the triggered comment can be distinguished from the untriggered comment. This is not limited in the present disclosure.

After detecting the predetermined operation on the first comment, the terminal device determines that the user is about to interact with the first comment, and then switches the appearance style of the first comment to the second appearance style to highlight the first comment from among the plurality of comments in the live streaming room interface. The predetermined operation may include, for example, a long-press, a click, a double-click, or the like on the first comment.

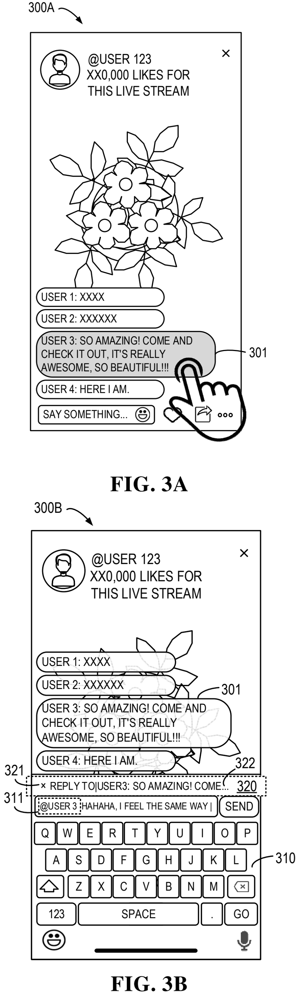

For example, as shown in FIG. 3A, the terminal device deepens the background color of a comment 301, in response to detecting a long-press on the comment 301. At this point, other comments presented in a live streaming room interface 300A are still presented in the first appearance style, and only the comment 301 is presented in the second appearance style deeper than the background color. In this way, the comment 301 can be highlighted, enabling the user to notice the differentiated appearance of the comment 301 and determine that the first predetermined operation has been validated.

In some embodiments, an appearance style of the first comment is switched from the first appearance style to the second appearance style, in response to the first predetermined operation starting to be detected. This is particularly applicable to a case in which the first predetermined operation needs to last for a certain duration, for example, in the case that the first predetermined operation is a long-press, a multiple-click, and the like. In this way, when the first predetermined operation starts, the selected first comment may be started to transition from the current first appearance style to the second appearance style. In some embodiments, the appearance style of the first comment is switched from the second appearance style back to the first appearance style, in response to detecting completion of the first predetermined operation. For example, the terminal device switches the appearance style of the comment 301 from the dark background color of FIG. 3A back to the light background color, in response to detecting completion of the long-press on the comment 301.

Regarding the specific switching manner of the appearance style, in some embodiments, the switching of the appearance style of the first comment may be directly switched. That is, the appearance style of the first comment is directly switched in response to detecting the start of the first predetermined operation on the first comment. For example, if the second appearance style is an appearance style after the background color in the first appearance style is deepened, the terminal device may directly switch the appearance style of the first comment from the first appearance style to the second appearance style with a darker background color, in response to detecting the start of the first predetermined operation on the first comment.

In some embodiments, the switching of the appearance style of the first comment may be smoothly transitioned. That is, the appearance style of the first comment is gradually transitioned from the first appearance style to the second appearance style, in response to detecting the start of the first predetermined operation on the first comment. For example, starting from a time when the long-press on the first comment is detected, the background color of the first comment is gradually deepened, causing the appearance style of the first comment to gradually transition from the first appearance style to the second appearance style, until the long-press is completed. In some embodiments, the appearance style of the first comment is switched from the second appearance style back to the first appearance style, in response to detecting completion of the first predetermined operation.

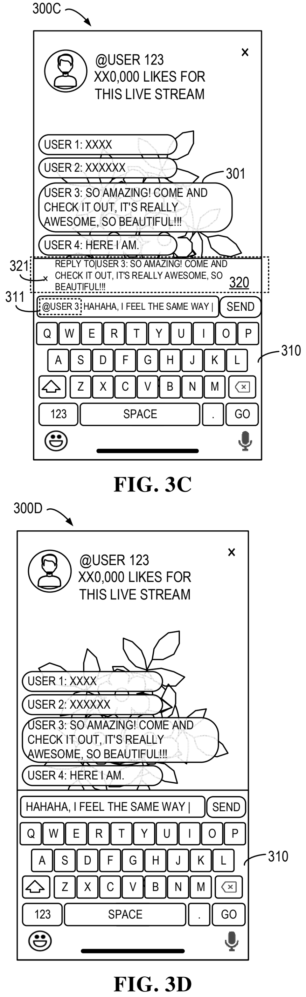

In some embodiments, the first predetermined operation is used to trigger a specific interaction on a comment. Such interaction may be, for example, a reply to the first comment. In this way, after the completion of the first predetermined operation, the terminal device may present an input panel for inputting a second comment. The second comment here is a comment or a reply to the first comment. In some embodiments, the input panel may include a mention indicator for mentioning the first user sending the first comment. As shown in FIG. 3B and FIG. 3C, a mention indicator 311 of "@user 3" is presented in an input panel 310, and the mention indicator 311 may prompt the user that the user who posted the comment 301 is the user 3, and the user is commenting on the comment posted by the user 3.

In some conventional live streaming interaction solutions, the input panel is only used for the user to directly input the reply, and cannot prompt the user the specific content of the comment that is currently being replied to, which may cause the user to easily forget the comment content to respond to while entering the content. To at least address this issue, in some embodiments, at least a portion of the first comment is presented in a predetermined region of the input panel. Specifically, if the length of the first comment is less than or equal to a predetermined length (the predetermined length depends on the size of the predetermined region for presenting the first comment), the first comment may be completely presented in the predetermined region. If the length of the first comment exceeds the predetermined length, only a portion of the first comment will be presented in the predetermined region. In this case, a detail view control may be presented in the predetermined region, and the terminal device may expand the predetermined region to present the entirety of the first comment in response to detecting a trigger on the detail view control and/or the portion of the first comment.

For example, as shown in FIG. 3B, the terminal device presents the input panel 310 in response to detecting a long-press on the comment 301. The terminal device further determines whether the length of the comment 301 exceeds a predetermined region 320 of the input panel 310. Where it is determined that the length of the comment 301 exceeds the length of the predetermined region 320, a portion of the comment 301 is presented at the predetermined region 320, with the remainder being hidden. In this case, the region 320 further presents a detail view control 322, and the terminal device may present, in response to detecting a trigger on the detail view control 322 shown in FIG. 3A, a live streaming room interface 300C shown in FIG. 3C. As shown in FIG. 3C, in the live streaming room interface 300C, the predetermined region 320 is expanded to present a complete comment 301. At this time, there is no need to present the detail view control 322 in the input panel 310.

In some embodiments, the terminal device may further hide the predetermined region to cancel the presentation of at least the portion of the first comment and delete the mention indicator from the input box, in response to detecting a presentation cancelling on at least the portion of the first comment. In some embodiments, the predetermined region presents a presentation cancelling control, and the terminal device determines that the presentation cancelling is detected in response to detecting the trigger on the presentation cancelling control. In some embodiments, the terminal device may further determine, in response to receiving a deletion on the mention indicator in the input box, that the presentation cancelling is received. For example, as shown in FIG. 3A, a presentation cancelling control 321 is also presented in a predetermined region 329 of the input panel 310. The terminal device may present, in response to detecting a trigger on the deletion control 321, a live streaming room interface 300D shown in FIG. 3D. As shown in FIG. 3D, the terminal device deletes the mention indicator 311 from the input box, and no longer presents the predetermined region 320, in response to detecting the trigger on the deletion control 321. Upon triggering the deletion control 321, the user may continue to enter a comment in the input panel, at which point the comment may not be considered a reply to the previously selected comment 301.

In conventional solutions of some applications, there is typically no prompt to inform the current user and the user who was commented on about the content of the reply to the comment. For example, user A posts comments a, b, and c in the live streaming room, and user B replies to the comment b. However the live streaming room interfaces for the user A and the user B can only indicate that the user B has replied to the user A, without informing the user A that the received reply is for which comment. This makes it impossible for the replied user to determine which comment the received reply corresponds to, affecting the interaction experience of the commented user. Additionally, it easily causes the commented user to overlook replies to their own comments and fail to obtain important information. To at least solve this problem, it is assumed that a user posting the first comment is a third user, and a current user that replies to the first comment is referred to as the first user (that is, the terminal device of the first user, and the live streaming room interface corresponds to the first user). In some embodiments, the second comment and at least the portion of the first comment are respectively presented in association within the live streaming room interface corresponding to the first user and the live streaming room interface corresponding to the third user, in response to the second comment being sent in reply to the first comment. Therefore, the first user and the third user may be intuitively prompted that the second comment is a reply to the first comment. In other words, for both parties interacting with the comment, an associated reply style may be displayed. The live streaming room interface corresponding to the first user and the live streaming room interface corresponding to the third user are shown in FIG. 4A.

As shown in FIG. 4A, if a live streaming room interface 400A is a live streaming room interface corresponding to the user 3 or the user 5, and a comment 402 is a reply to a comment 401, at least a portion of the comment 401 will be presented in a comment 402-1. In this way, when the user 3 and the user 5 see that the comment 402 is displayed in the live streaming room interface, they may clearly understand that the comment 402 is a reply to the comment 401. It may be understood that, similar to the predetermined region of the input panel, if the region presenting at least the portion of the comment 401 of the comment 402-1 is referred to as a reference region, the terminal device may present the complete comment 401 in the comment 402-1 in response to the length of the comment 401 being less than or equal to the reference region. The terminal device may present the portion of the comment 401 in the comment 402-1 in response to the length of the comment 401 exceeding the length of the reference region.

In some embodiments, because other users other than the first user and the third user may not be concerned about which comment the reply between the first user and the third user is directed at, to avoid interfering with the live stream watching or commenting interaction on other users, the second comment for replying to the first comment may be separately presented in the live streaming room interface corresponding to other users. As shown in FIG. 4B, if the live streaming room interface 400B corresponds to another user other than the first user and the third user, a comment 402-2 of the reply comment 401 may only include the reply content for the comment 401, without the need to include at least the portion of the comment 401.

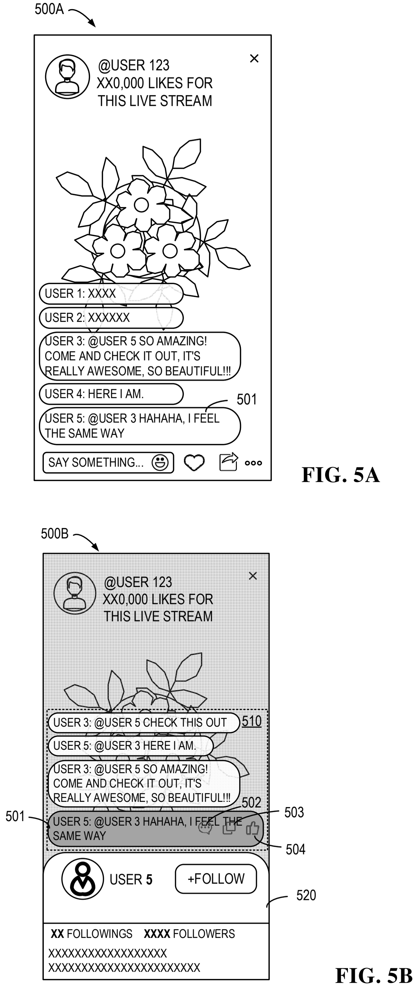

At least in order to solve the problem in the conventional solution that only a single reply information can be seen, the historical process of discussion cannot be obtained, and the information obtaining integrity is incomplete, in some embodiments, the terminal device may further determine, in response to detecting the second predetermined operation on the third comment of the at least one comment, whether the third comment is associated with at least one fourth comment, and in accordance with a determination that the third comment is associated with the at least one fourth comment, the third comment and the at least one fourth comment are presented in the live streaming room interface. The second predetermined operation may be, for example, a click, a double-click, or the like. In some embodiments, in accordance with a determination that the third comment includes the mention indicator, the terminal device determines that the third comment is associated with the at least one fourth comment. In some embodiments, the at least one fourth comment includes a historical interaction comment in the live streaming room between the user who posted the third comment and the user indicated by the mention indicator in the third comment. As shown in FIG. 5A and FIG. 5B, the terminal device may determine, in response to detecting a predetermined operation on the comment 501 in the live streaming room interface 500A, that the user posting the comment 501 is the user 5, and the user indicated by the mention indicator in the comment 501 is the user 3. The terminal device further determines, as at least one fourth comment, a historical interaction comment (the comment comprises a comment of the mention indicator indicating the user 5 or the user 3) posted between the user 5 and the user 3 in the live streaming room, and displays the at least one fourth comment together with the comment 501 in the live streaming room interface 500B.

Regarding the display order of the at least one fourth comment, in some embodiments, the terminal device may present the third comment and the at least one fourth comment in a predetermined association order. The predetermined association order here may be the posted order of corresponding comments. For example, if the user 3 firstly posted comment A, the user 5 secondly posted comment B as a reply to the comment A, and then the user 3 posted comment C as a reply to the comment B, the 3 comments may be presented in sequence in the order of the comments A, B, and C.

In some embodiments, while the third comment and the at least one fourth comment are presented on the live streaming room interface, the terminal device may further present at least one interaction control related to the third comment and used to trigger an interaction on the third comment. The number of the at least one interaction control may be a default number of the live streaming rooms, for example, 3. Certainly, the number may also be predetermined by the user, which is not limited in the present disclosure. The at least one interaction control includes, but is not limited to, a commenting control, a like control, a copy control, a click control, a reply control, a sharing control, and the like. In some embodiments, for third comments with different content, the at least one interaction control presented by the terminal device is the same. For example, a like control, a copy control, and a commenting control may be presented. In some embodiments, for third comments with different content, the terminal device may present at least one different interaction control. In this case, the terminal device may identify content in the third comment, and provide an associated interaction control based on the identified result. For example, if the third comment includes a product name, the provided at least one interaction control may include a link sharing control, and the terminal device may generate, in response to receiving a trigger on the link sharing control, reply content for the third comment including a link of the product. As shown in FIG. 5B, in response to detecting the predetermined operation on the comment 501, the comment 501 and at least one comment associated with the comment 501 are presented in the live streaming room interface 500B, and at the same time interaction controls 502, 503, and 504 may also be presented at the comment 501. For example, if the interaction control 504 is a like control, the terminal device may determine to perform a like on the comment 501 in response to detecting a trigger on the interaction control 504.

In some embodiments, to prompt the user on which comment the second predetermined operation was performed, while the third comment and the at least one fourth comment are presented on the live streaming room interface, the terminal device may adjust the appearance style of the third comment on which the second predetermined operation was performed, enabling the appearance style of the third comment to be different from the appearance style of the at least one fourth comment. For example, as shown in FIG. 5B, the background color of the comment 501 may be deepened, enabling the appearance style of the comment 501 to be different from the appearance of the at least one fourth comment.

In some embodiments, the terminal device may further present a profile card corresponding to a fourth user sending the third comment of the at least one comment, in response to detecting the second predetermined operation on the third comment. The profile card herein includes information related to the fourth user, such as the name of the user, the age of the user, the location of the user, and the like. The terminal device may present the third comment and the at least one fourth comment in a region adjacent to the profile card. For example, as shown in FIG. 5B, a profile card 520 corresponding to the user 5 sending the comment 501 is presented, in response to detecting a click on the comment 501. The comment 501 and the at least one fourth comment associated with the comment 501 are presented in a region 510 adjacent to the profile card 520.

According to example embodiments of the present disclosure, interaction prompt information prompting more interaction modes for selection by the user may be provided to the user, based on an interaction status of the user in the live streaming room, which helps to improve the interaction experience of the user in the live streaming room, and promotes the enthusiasm for interaction of the user. In addition, in some embodiments, by differentially presenting the triggered comment, the user can intuitively be prompted about which comment the user has currently triggered the predetermined operation on, allowing the user to promptly confirm whether the trigger was successful and to quickly detect any accidental touch. This enhances the interaction experience of the user in the live broadcast room. In some embodiments, by presenting at least a portion of the replied comment on the input panel, the specific content of the comment that the user is replying to may be prompted. In some embodiments, the historical reply message between two users may be presented in response to a user operation, which may improve the information integrity of the content obtained by the user.

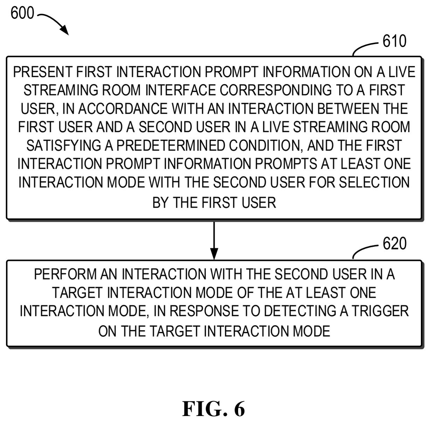

FIG. 6 shows a flowchart of a process 600 for live streaming interaction according to some embodiments of the present disclosure. The process 600 may be implemented at a terminal device (for example, the terminal device 120 and/or the terminal device 140). For ease of discussion, the process 600 will be described with reference to the environment 100 of FIG. 1.

At block 610, the terminal device presents first interaction prompt information on a live streaming room interface corresponding to a first user, in accordance with an interaction between the first user and a second user in a live streaming room satisfying a predetermined condition. The first interaction prompt information prompts at least one interaction mode with the second user for selection by the first user.

At block 620, the terminal device performs an interaction with the second user in a target interaction mode of the at least one interaction mode, in response to detecting a trigger on the target interaction mode.

In some embodiments, second interaction prompt information is presented in a live streaming room interface corresponding to the second user, in accordance with an interaction between the first user and a second user in a live streaming room satisfying a predetermined condition. The second interaction prompt information prompts at least one interaction mode with the first user for selection by the second user.

In some embodiments, the at least one interaction mode comprises at least one of: a first interaction mode for creating a private interaction channel for the first user and the second user, or a second interaction mode for following a user account.

In some embodiments, performing the interaction with the second user comprises: creating the private interaction channel between the first user and the second user, in accordance with the target interaction mode being the first interaction mode; and presenting an interaction region corresponding to the private interaction channel, the interaction region presenting historical interaction information between the first user and the second user in the live streaming room.

In some embodiments, the interaction satisfying the predetermined condition comprises an interaction in a public interaction channel of the live streaming room, and the historical interaction information at least comprises an interaction comment between the first user and the second user in the public interaction channel. In some embodiments, the interaction satisfying the predetermined condition comprises an interaction in a group interaction channel of the live streaming room, and the historical interaction information at least comprises an interaction comment between the first user and the second user in the group interaction channel.

In some embodiments, presenting the first interaction prompt information comprises: presenting the first interaction prompt information in the live streaming room interface in response to detecting that an interaction with the second user is triggered by the first user in the live streaming room.

In some embodiments, the interaction between the first user and the second user in the live streaming room comprises an interaction between the first user and the second user in a third interaction mode, and the third interaction mode is different from the at least one interaction mode.

In some embodiments, the third interaction mode comprises an interaction mode in a public interaction channel of the live streaming room or an interaction mode in a group interaction channel of the live streaming room.

In some embodiments, the process 600 further comprises: presenting at least one comment in the live streaming room interface, the at least one comment being presented in a first appearance style; and presenting a first comment in a second appearance style, in response to detecting a first predetermined operation on the first comment of the at least one comment, the second appearance style being different from the first appearance style.

In some embodiments, the first predetermined operation comprises a long-press on the first comment.

In some embodiments, presenting the first comment in the second appearance style comprises: smoothly transitioning an appearance style of the first comment from the first appearance style to the second appearance style, starting from a time when the first predetermined operation is detected; and the process 600 further comprises: presenting the first comment in the first appearance style in response to detecting completion of the first predetermined operation.

In some embodiments, the first comment displayed in the second appearance style is more prominent compared to the first comment displayed in the first appearance style.

In some embodiments, the process 600 further comprises: presenting an input panel for inputting a second comment, in response to detecting the first predetermined operation on the first comment; and presenting at least a portion of the first comment in a predetermined region of the input panel.

In some embodiments, presenting at least a portion of the first comment comprises: presenting, in a predetermined region, the portion of the first comment and a detail view control for the first comment, in accordance with the length of the first comment exceeding a predetermined length; and expanding the predetermined region to display the entirety of the first comment, in response to detecting a trigger on the detail view control.

In some embodiments, an input box of the input panel comprises a mention indicator for mentioning a third user sending the first comment, and the process 600 further comprises: deleting the mention indicator from the input box, in response to detecting presentation cancelling for at least the portion of the first comment.

In some embodiments, the second comment received in the input panel is a reply to the first comment, and the process 600 further comprises: presenting, in response to the second comment being sent, the second comment in association with at least the portion of the first comment in the live streaming room interface corresponding to the first user, to indicate that the second comment is a reply to the first comment.

In some embodiments, the second comment and at least the portion of the first comment are further presented in association within a live streaming room interface corresponding to a third user sending the first comment, and the second comment is separately presented in a live streaming room interface corresponding to a further user other than the first user and the third user.

In some embodiments, the process 600 further comprises: determining whether a third comment of the at least one comment is associated with at least one fourth comment, in response to detecting a second predetermined operation on the third comment; and presenting the third comment and the at least one fourth comment in the live streaming room interface, in accordance with the third comment being associated with the at least one fourth comment.

In some embodiments, presenting the third comment and the at least one fourth comment comprises: presenting the third comment and the at least one fourth comment in a predetermined associated order.

In some embodiments, presenting the third comment and the at least one fourth comment comprises: presenting at least one interaction control related to the third comment, and the at least one interaction control triggers an interaction on the third comment.

In some embodiments, an appearance style of the third comment is different from an appearance style of the at least one fourth comment.

In some embodiments, the process 600 further comprises: presenting a profile card corresponding to a fourth user sending the third comment, in response to detecting the second predetermined operation on the third comment, the profile card comprising information related to the fourth user; where the third comment and the at least one fourth comment are presented in a region adjacent to the profile card.

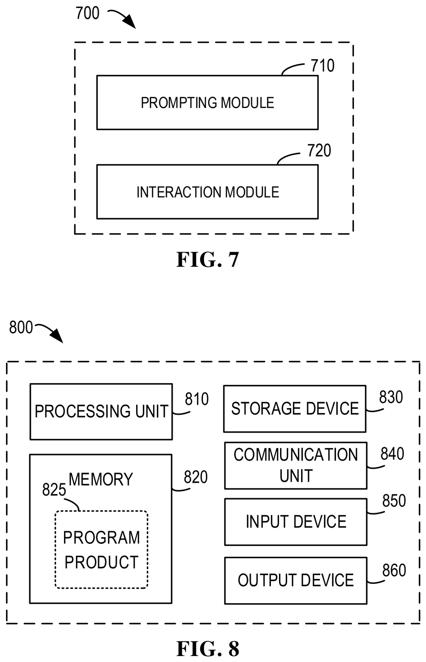

FIG. 7 is a schematic structural block diagram of an apparatus 700 for live streaming interaction according to some embodiments of the present disclosure. The apparatus 700 may be implemented as or included in a terminal device (for example, the terminal device 120 and/or the terminal device 140). The various modules/components in the apparatus 700 may be implemented by hardware, software, firmware, or any combination thereof.

The apparatus 700 comprises a prompting module 710 configured to present first interaction prompt information on a live streaming room interface corresponding to a first user, in accordance with an interaction between the first user and a second user in a live streaming room satisfying a predetermined condition, the first interaction prompt information prompting at least one interaction mode with the second user for selection by the first user. The apparatus 700 further comprises an interaction module 720 configured to perform an interaction with the second user in a target interaction mode of the at least one interaction mode, in response to detecting a trigger on the target interaction mode.

In some embodiments, second interaction prompt information is presented in a live streaming room interface corresponding to the second user, in accordance with an interaction between the first user and a second user in a live streaming room satisfying a predetermined condition. The second interaction prompt information prompts at least one interaction mode with the first user for selection by the second user.

In some embodiments, the at least one interaction mode comprises at least one of: a first interaction mode for creating a private interaction channel for the first user and the second user, or a second interaction mode for following a user account.

In some embodiments, the interaction module 720 comprises a channel creating module configure to create the private interaction channel between the first user and the second user, in accordance with the target interaction mode being the first interaction mode; and present an interaction region corresponding to the private interaction channel, the interaction region presenting historical interaction information between the first user and the second user in the live streaming room.

In some embodiments, the interaction satisfying the predetermined condition comprises an interaction in a public interaction channel of the live streaming room, and the historical interaction information at least comprises an interaction comment between the first user and the second user in the public interaction channel. In some embodiments, the interaction satisfying the predetermined condition comprises an interaction in a group interaction channel of the live streaming room, and the historical interaction information at least comprises an interaction comment between the first user and the second user in the group interaction channel.

In some embodiments, the prompting module 710 comprises a first information presenting module configured to present the first interaction prompt information in the live streaming room interface in response to detecting that an interaction with the second user is triggered by the first user in the live streaming room.

In some embodiments, the interaction between the first user and the second user in the live streaming room comprises an interaction between the first user and the second user in a third interaction mode, and the third interaction mode is different from the at least one interaction mode.

In some embodiments, the third interaction mode comprises an interaction mode in a public interaction channel of the live streaming room or an interaction mode in a group interaction channel of the live streaming room.

In some embodiments, the apparatus 700 further comprises a first appearance presenting module configured to present at least one comment in the live streaming room interface, the at least one comment being presented in a first appearance style; and a second appearance presenting module configured to present a first comment in a second appearance style, in response to detecting a first predetermined operation on the first comment of the at least one comment, the second appearance style being different from the first appearance style.

In some embodiments, the first predetermined operation comprises a long-press on the first comment.

In some embodiments, the second appearance presenting module comprises a transitioning module configured to smoothly transition an appearance style of the first comment from the first appearance style to the second appearance style, starting from a time when the first predetermined operation is detected; and the apparatus 700 further comprises: a first presenting module configure to present the first comment in the first appearance style in response to detecting completion of the first predetermined operation.

In some embodiments, the first comment displayed in the second appearance style is more prominent compared to the first comment displayed in the first appearance style.

In some embodiments, the apparatus 700 further comprises an input panel presenting module configured to present an input panel for inputting a second comment, in response to detecting the first predetermined operation on the first comment; and a comment presenting module configured to present at least a portion of the first comment in a predetermined region of the input panel.

In some embodiments, the comment presenting module comprises a control presenting module configure to present, in a predetermined region, the portion of the first comment and a detail view control for the first comment, in accordance with the length of the first comment exceeding a predetermined length; and a region expanding module configured to expand the predetermined region to display the entirety of the first comment, in response to detecting a trigger on the detail view control.

In some embodiments, an input box of the input panel comprises a mention indicator for mentioning a third user sending the first comment, and the apparatus 700 further comprises an indicator deleting module configured to delete the mention indicator from the input box, in response to detecting presentation cancelling for at least the portion of the first comment.

In some embodiments, the second comment received in the input panel is a reply to the first comment, and the apparatus 700 further comprises an association presenting module configured to present, in response to the second comment being sent, the second comment in association with at least the portion of the first comment in the live streaming room interface corresponding to the first user, to indicate that the second comment is a reply to the first comment.

In some embodiments, the second comment and at least the portion of the first comment are further presented in association within a live streaming room interface corresponding to a third user sending the first comment, and the second comment is separately presented in a live streaming room interface corresponding to a further user other than the first user and the third user.

In some embodiments, the apparatus 700 further comprises a determining module configured to determine whether a third comment of the at least one comment is associated with at least one fourth comment, in response to detecting a second predetermined operation on the third comment; and the association presenting module configrued to present the third comment and the at least one fourth comment in the live streaming room interface, in accordance with the third comment being associated with the at least one fourth comment.

In some embodiments, the association presenting module is configrued to present the third comment and the at least one fourth comment in a predetermined associated order.

In some embodiments, the association presenting module comprises an interaction control presenting module configrued to present at least one interaction control related to the third comment, and the at least one interaction control triggers an interaction on the third comment.

In some embodiments, an appearance style of the third comment is different from an appearance style of the at least one fourth comment.

In some embodiments, the apparatus 700 further comprises a profile card presenting module configured to present a profile card corresponding to a fourth user sending the third comment, in response to detecting the second predetermined operation on the third comment, the profile card comprising information related to the fourth user; where the third comment and the at least one fourth comment are presented in a region adjacent to the profile card.

The modules and/or units included in the apparatus 700 may be implemented in various ways, including software, hardware, firmware, or any combination thereof. In some embodiments, one or more modules and/or units may be implemented using software and/or firmware, such as machine-executable instructions stored on a storage medium. In addition to or as an alternative to machine-executable instructions, some or all of the modules and/or units in the apparatus 700 may be implemented, at least in part, by one or more hardware logic components. By way of example and not limitation, example types of hardware logic components that may be used include a field programmable gate array (FPGA), an application specific integrated circuit (ASIC), an application specific standard product (ASSP), a system-on-a-chip (SOC), a complex programmable logic device (CPLD), and the like.

FIG. 8 shows a block diagram illustrating an electronic device 800 in which one or more embodiments of the present disclosure may be implemented. It should be understood that the electronic device 800 illustrated in FIG. 8 is merely an example and should not constitute any limitation on the functionality and scope of the embodiments described herein.

As shown in FIG. 8, the electronic device 800 is in the form of a general-purpose electronic device. Components of the electronic device 800 may include, but are not limited to, one or more processors or processing units 810, a memory 820, a storage device 830, one or more communication units 840, one or more input devices 850, and one or more output devices 860. The processing unit 810 may be an actual or virtual processor and capable of performing various processes according to programs stored in the memory 820. In a multiprocessor system, multiple processing units execute computer-executable instructions in parallel to improve the parallel processing capabilities of the electronic device 800.

The electronic device 800 typically includes a plurality of computer storage media. Such media may be any available media accessible to the electronic device 800, including, but not limited to, volatile and non-volatile media, removable and non-removable media. The memory 820 may be a volatile memory (for example, a register, a cache, a random access memory (RAM)), a non-volatile memory (for example, a read-only memory (ROM), an electrically erasable programmable read-only memory (EEPROM), a flash memory), or some combination thereof. The storage device 830 may be a removable or non-removable medium and may include a machine-readable medium, such as a flash drive, a magnetic disk, or any other medium, which may be capable of storing information and/or data (for example, training data for training) and may be accessed within the electronic device 800.

The electronic device 800 may further include additional removable/non-removable, volatile/non-volatile storage media. Although not shown in FIG. 8, a disk drive for reading or writing from a removable, non-volatile magnetic disk (for example, a "floppy disk") and an optical disk drive for reading or writing from a removable, non-volatile optical disk may be provided. In these cases, each drive may be connected to a bus (not shown) by one or more data media interfaces. The memory 820 may include a computer program product 825 having one or more program modules configured to perform various methods or operations according to various embodiments of the present disclosure.

The communication unit 840 is configured to communicate with another electronic device through a communication medium. In addition, the functionality of components of the electronic device 800 may be implemented in a single computing cluster or multiple computing machines capable of communicating over a communication connection. Thus, the electronic device 800 may operate in a networked environment using logical connections with one or more other servers, network personal computers (PCs), or another network node.

The input device 850 may be one or more input devices such as a mouse, a keyboard, a trackball, or the like. The output device 860 may be one or more output devices, such as a display, a speaker, a printer, or the like. The electronic device 800 may also communicate with one or more external devices (not shown) through the communication unit 840 as needed, external devices such as storage devices, display devices, or the like, communicate with one or more devices that enable a user to interact with the electronic device 800, or communicate with any device (for example, a network card, a modem, or the like) that enables the electronic device 800 to communicate with one or more other electronic devices. Such communication may be performed via an input/output (I/O) interface (not shown).

According to example implementations of the present disclosure, there is provided a computer-readable storage medium having computer-executable instructions stored thereon, where the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to the flowchart and/or block diagram of the method, apparatus, device, and computer program product implemented in accordance with the present disclosure. It should be understood that each block of the flowchart and/or block diagram, and combinations of blocks in the flowcharts and/or block diagrams, may be implemented by computer-readable program instructions.

These computer-readable program instructions may be provided to a processing unit of a general-purpose computer, a special-purpose computer, or other programmable data processing device to produce a machine, such that the instructions, when executed by a processing unit of a computer or other programmable data processing device, produce means to implement the functions/operations specified in the flowchart and/or block diagram. These computer-readable program instructions may also be stored in a computer-readable storage medium that cause the computer, programmable data processing device, and/or other devices to function in a particular manner, such that the computer-readable medium storing instructions includes an article of manufacture including instructions to implement aspects of the functions/operations specified in one or more blocks of the flowchart and/or block diagram.

The computer-readable program instructions may be loaded onto a computer, other programmable data processing device, or other device, such that a series of operational steps are performed on a computer, other programmable data processing device, or other device to produce a computer-implemented process. Therefore, the instructions executed on a computer, other programmable data processing device, or other device implement the functions/operations specified in one or more blocks of the flowchart and/or block diagram.

The flowchart and block diagrams in the figures show the architecture, functionality, and operation of possible implementations of systems, methods, and computer program products according to various implementations of the present disclosure. In this regard, each block in the flowchart or block diagram may represent a module, a program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are examples, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for live streaming interaction, comprising:
presenting first interaction prompt information on a live streaming room interface corresponding to a first user, in accordance with an interaction between the first user and a second user in a live streaming room satisfying a predetermined condition, the first interaction prompt information prompting at least one interaction mode with the second user for selection by the first user; and
performing an interaction with the second user in a target interaction mode of the at least one interaction mode, in response to detecting a trigger on the target interaction mode.

2. The method of claim 1, wherein the at least one interaction mode comprises at least one of: a first interaction mode for creating a private interaction channel for the first user and the second user, or a second interaction mode for following a user account.

3. The method of claim 2, wherein performing the interaction with the second user comprises:
creating the private interaction channel between the first user and the second user, in accordance with the target interaction mode being the first interaction mode; and
presenting an interaction region corresponding to the private interaction channel, the interaction region presenting historical interaction information between the first user and the second user in the live streaming room.

4. The method of claim 3, wherein the interaction satisfying the predetermined condition comprises an interaction in a public interaction channel of the live streaming room, and the historical interaction information at least comprises an interaction comment between the first user and the second user in the public interaction channel, and/or
wherein the interaction satisfying the predetermined condition comprises an interaction in a group interaction channel of the live streaming room, and the historical interaction information at least comprises an interaction comment between the first user and the second user in the group interaction channel.

5. The method of claim 1, wherein presenting the first interaction prompt information comprises:
presenting the first interaction prompt information in the live streaming room interface in response to detecting that an interaction with the second user is triggered by the first user in the live streaming room.

6. The method of claim 1, wherein the interaction between the first user and the second user in the live streaming room comprises an interaction between the first user and the second user in a third interaction mode, and the third interaction mode is different from the at least one interaction mode.

7. The method of claim 6, wherein the third interaction mode comprises an interaction mode in a public interaction channel of the live streaming room or an interaction mode in a group interaction channel of the live streaming room.

8. The method of claim 1, further comprising:
presenting at least one comment in the live streaming room interface, the at least one comment being presented in a first appearance style; and
presenting a first comment in a second appearance style, in response to detecting a first predetermined operation on the first comment of the at least one comment, the second appearance style being different from the first appearance style.

9. The method of claim 8, wherein the first predetermined operation comprises a long-press on the first comment.

10. The method of claim 8, wherein presenting the first comment in the second appearance style comprises:
smoothly transitioning an appearance style of the first comment from the first appearance style to the second appearance style, starting from a time when the first predetermined operation is detected; and
wherein the method further comprises: presenting the first comment in the first appearance style in response to detecting completion of the first predetermined operation.

11. The method of claim 8, further comprising:
presenting an input panel for inputting a second comment, in response to detecting the first predetermined operation on the first comment; and
presenting at least a portion of the first comment in a predetermined region of the input panel.

12. The method of claim 11, wherein an input box of the input panel comprises a mention indicator for mentioning a third user sending the first comment, and the method further comprises:
deleting the mention indicator from the input box, in response to detecting presentation cancelling for at least the portion of the first comment.

13. The method of claim 11, wherein the second comment received in the input panel is a reply to the first comment, and the method further comprises:
presenting, in response to the second comment being sent, the second comment in association with at least the portion of the first comment in the live streaming room interface corresponding to the first user, to indicate that the second comment is a reply to the first comment.

14. The method of claim 13, wherein the second comment and at least the portion of the first comment are further presented in association within a live streaming room interface corresponding to a third user sending the first comment, and
wherein the second comment is separately presented in a live streaming room interface corresponding to a further user other than the first user and the third user.

15. The method of claim 8, further comprising:
determining whether a third comment of the at least one comment is associated with at least one fourth comment, in response to detecting a second predetermined operation on the third comment; and
presenting the third comment and the at least one fourth comment in the live streaming room interface, in accordance with the third comment being associated with the at least one fourth comment.

16. The method of claim 15, wherein an appearance style of the third comment is different from an appearance style of the at least one fourth comment.

17. The method of claim 15, further comprising:
presenting a profile card corresponding to a fourth user sending the third comment, in response to detecting the second predetermined operation on the third comment, the profile card comprising information related to the fourth user;
wherein the third comment and the at least one fourth comment are presented in a region adjacent to the profile card.

18. An apparatus for live streaming interaction, comprising:
a prompting module configured to present first interaction prompt information on a live streaming room interface corresponding to a first user, in accordance with an interaction between the first user and a second user in a live streaming room satisfying a predetermined condition, the first interaction prompt information prompting at least one interaction mode with the second user for selection by the first user; and
an interaction module configured to perform an interaction with the second user in a target interaction mode of the at least one interaction mode, in response to detecting a trigger on the target interaction mode.

19. An electronic device, comprising:
at least one processing unit; and
at least one memory coupled to the at least one processing unit and storing instructions for execution by the at least one processing unit, the instructions, when executed by the at least one processing unit, causing the device to perform the method according to any of claims 1 to 17.

20. A computer-readable storage medium having stored thereon a computer program, the computer program, when executed by a processor, implementing the method according to any of claims 1 to 17.
